# EUROPÄISCHE PATENTSCHRIFT

(11) **EP 2 142 772 B1**
(45) Veröffentlichungstag und Bekanntmachung des Hinweises auf die Patenterteilung: **11.05.2011**
(21) Anmeldenummer: 08708549.4
(22) Anmeldetag: 01.02.2008
(51) Int. Cl.: F01N 3/20

(54) **SCHWAPPTOPF**
SPILL BASIN
POT D'AMORTISSEMENT

(30) Priorität: 30.03.2007 DE 102007015395
(43) Veröffentlichungstag der Anmeldung: 13.01.2010
(73) Patentinhaber: Robert Bosch GmbH, 70442 Stuttgart (DE)
(72) Erfinder: HAEBERER, Rainer, 75015 Bretten (DE); HORN, Matthias, 71691 Freiberg (DE)
(86) Internationale Anmeldenummer: PCT/EP2008/051239
(87) Internationale Veröffentlichungsnummer: WO 2008/119576

(56) Entgegenhaltungen:
- EP-A- 1 006 014
- DE-A1- 19 615 081
- DE-A1- 19 619 933
- DE-A1-102006 027 487
- US-A- 5 129 544

## Beschreibung

### Stand der Technik

Bei Fahrzeugen mit Verbrennungskraftmaschinen muss aufgrund der in den nächsten Jahren anstehenden verschärften Abgasgesetzgebung unter anderem der Schadstoff NOₓ reduziert werden. Eine Methode, die zur Anwendung kommt, ist das SCR-Verfahren (Selective Catalytic Reduction), bei dem der Schadstoff NOₓ unter Zuhilfenahme von flüssigem Reduktionsmittel zu N₂ und H₂O reduziert werden. Das flüssige Reduktionsmittel wird in einem Tank gelagert und wird vom Fördermodul über eine Leitung vom Tank zum Dosiermodul befördert. Da das Reduktionsmittel unterhalb einer Temperatur von -11 °C gefriert, muss der Tank mit einer Heizung ausgerüstet werden. Diese Heizung wird bei Bedarf eingeschaltet und taut das gefrorene Reduktionsmittel auf. Die Heizung samt Sensorik sind in einem Topf untergebracht. Dieser Topf, der gleichzeitig als Schwapptopf dient, wird innerhalb des Tanks positioniert. Da über der Flüssigkeit stets ein Luftpolster steht, beginnt der Tank prinzipbedingt vom Tankboden her zu gefrieren. Aufgrund der Eisbildung wird der Schwapptopf zunächst am Boden des Tanks festgehalten.

Da sich das Reduktionsmittel beim Einfrieren um ca. 10 % seines ursprünglichen Volumens ausdehnt, muss der Schwapptopf an der Tankdecke flexibel fixiert sein. Drückt das gefrorene Reduktionsmittel infolge der Volumenexpansion gegen die Tankdecke, so kann die Tankdecke aufgrund der flexiblen Fixierung des Schwapptopfes nach oben nachgeben. Somit ist eine Beschädigung des Schwapptopfes infolge Eisdruck ausgeschlossen. Die bisher eingesetzte Lösung setzt voraus, dass der Schwapptopf im unteren Bereich des Tanks eingerastet ist und im oberen Bereich flexibel an die Tankdecke gekoppelt ist. Die Verrastung im unteren Bereich ist sehr aufwändig darzustellen, zumeist die dementsprechenden Tanks im Blasverfahren hergestellt werden und somit mindestens ein zusätzlich durchzuführender Schweißvorgang erforderlich ist.

Aus EP 1 561 016 ist ein Verfahren zur Nachbehandlung des Abgases einer Verbrennungskraftmaschine bekannt, bei dem ein flüssiges Reduktionsmittel als Hilfsmittel zur Behandlung verwendet wird. Wenn die Temperatur des flüssigen Reduktionsmittels einen kritischen Wert unterschreitet, wird eine teilweise chemische Umwandlung des Reduk-tionsmittels in einem den Gefrierpunkt des Reduktionsmittels absenkenden Stoff angeregt.

US5129544 offenbart einen Kraftstofftank wobei ein Schwapptopf in einer vertiefung des Tankbodens geführt ist.

### Offenbarung der Erfindung

Erfingdungsgemäß wird vorgeschlagen, einen Schwapptopf zur Dämpfung von Bewegungen eines Fluides in einem, insbesondere ein Reduktionsmittel aufnehmenden Tank in einer Vertiefung im Tankboden radial und axial entlang eines Führungsabschnittes zu führen. Dazu wird der bevorzugt im Wege des Blasverfahrens hergestellte Tank mit einer Anzahl von Ausstülpungen, die zum Beispiel rippenförmig ausgebildet werden können, versehen. Die insbesondere im Tankboden des im Wege des Blasverfahrens hergestellten Tanks ausgebildeten rippenförmig ausgestalteten Ausstülpungen weisen eine dem in der Vertiefung des Tankbodens geführten Schwapptopf zuweisende Kontaktfläche auf, insbesondere ist zwischen den am Umfang einer Vertiefung im Tankboden angeordneten Ausstülpungen und den korrespondierenden Aussparungen in der Mantelfläche des Schwapptopfs ein Kegelwinkel ausgebildet.

Durch die Ausführung eines Kegelwinkels zwischen den Kontaktflächen der zum Beispiel sternförmig um die Vertiefung angeordneten bevorzugt rippenförmig gestalteten Ausstülpungen sowie den dazu korrespondierend ausgebildeten Aussparungen in der Mantelfläche des Schwapptopfes im Führungsbereich desselben, wird eine radiale und axiale Führung des Schwapptopfes in entlang der Wandfläche der Vertiefung im Tankboden ausgebildeten Führungsabschnitten erreicht. Die Vertiefung im Tankboden dient gleichzeitig als Pumpensumpf. Bevorzugt werden im Tankboden, zum Beispiel in 120°-Anordnung zueinander, in der Tankblasform bevorzugt rippenförmig ausgestaltete Ausstülpungen ausgebildet, in die der Schwapptopf mit seinem Führungsbereich, der eine der Anzahl der im Tankboden ausgebildeten Ausstülpungen korrespondierende Anzahl von Aussparungen aufweist, eingesetzt wird.

Durch die mindestens drei im Tankboden um eine Vertiefung herum angeordneten rippenförmig ausgebildeten Ausstülpungen bzw. die dazu korrespondierenden Aussparungen in der Mantelfläche am Schwapptopf, kommt es durch Ausbildung des Kegelwinkels, d. h. einer Konizität zwischen Vertiefung und Schwapptopf, zum radialen Fixieren von Schwapptopf und Tank zueinander. Eine partielle Ausbildung der insbesondere rippenförmig ausgebildeten Ausstülpungen bewirkt überdies, dass das im Tank bevorratete Reduktionsmittel in dem Sumpfbereich des Tanks hineinströmen kann.

Bevorzugt wird der Schwapptopf mittels eines Federelementes gegen die Tankdecke axial verspannt. Aufgrund der Fixierung im Tank, d. h. innerhalb des Führungsbereiches zwischen den in der Mantelfläche des Schwapptopfes ausgebildeten Aussparungen und den dazu korrespondierend angeordneten bevorzugt rippenförmig ausgebildeten Ausstülpungen im Tankboden ist der Schwapptopf mit dem in axialer Richtung wirkenden Federelement im Hohlraum des das Reduktionsmittel bevorratenden Tankes schüttelfest gelagert.

### Kurze Beschreibung der Zeichnungen

Anhand der Zeichnungen wird die Erfindung nahe stehend eingehender beschrieben.

Es zeigt:
- Figur 1: eine Seitenansicht des im Tank innerhalb eines Führungsbereiches am Tankbo- den radial und axial geführten Schwapptopfes,
- Figur 2: eine Draufsicht auf den Tankboden bei aus dem Tank entnommenen Schwapp- topf und
- Figur 3: die Bodenfläche des Schwapptopfes gemäß der Darstellung in Figur 1 mit am Umfang dargestellten Aussparungen.

### Ausführungsformen

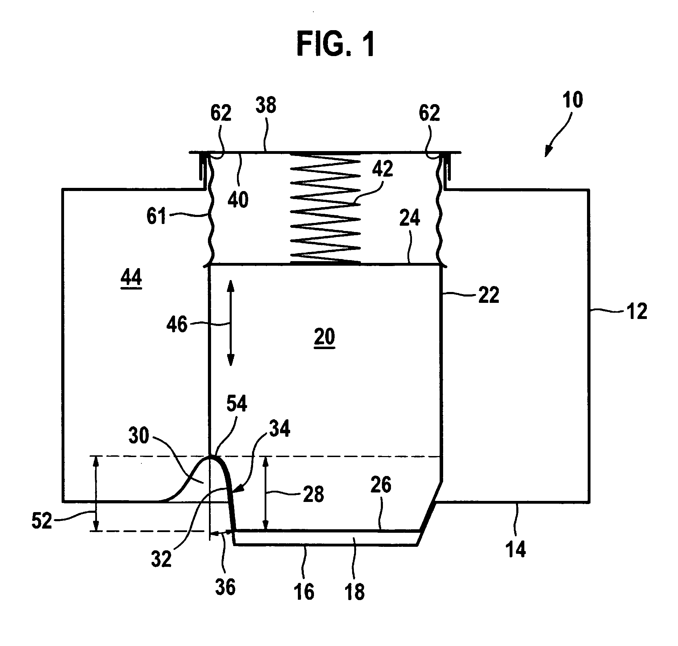

Der Darstellung gemäß Figur 1 ist der Tank, der insbesondere der Aufnahme eines Reduktionsmittels dient, dargestellt, in dessen Tankboden ein Führungsbereich zur Führung eines mittels einer Feder vorgespannten Schwapptopfes ausgebildet ist.

Figur 1 zeigt einen Tank 10, der durch eine Tankwand 12 und einen Tankboden 14 begrenzt ist. Der Tank 10 wird bevorzugt im Wege des Blasverfahrens in einer Blasform gefertigt und aus Kunststoff hergestellt.

Der Tank 10 umfasst den Tankboden 14, in dem eine Vertiefung 16 ausgebildet ist, die einen Sumpf 18 bildet. In dem Tank 10 wird bevorzugt ein unterhalb einer Außentemperatur von -11 °C gefrierendes Reduktionsmittel zur Konditionierung des Abgases aufgenommen. Der Darstellung gemäß Figur 1 ist entnehmbar, dass im Tank 10 ein Schwapptopf 20 beweglich aufgenommen ist. Der Schwapptopf 20 weist eine Mantelfläche 22 sowie eine Oberseite 24 und einen Boden 26 auf.

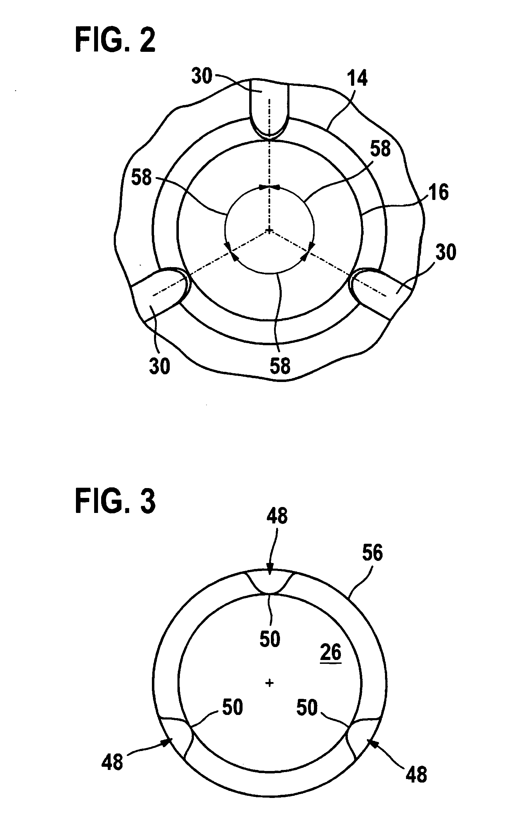

Aus der Darstellung gemäß Figur 1 ist entnehmbar, dass der Schwapptopf 20 mit seinem im unteren Bereich der Mantelfläche 22 ausgebildeten Führungsbereich 28 in der Vertiefung 16 des Tankbodens 14 gerührt ist. Dazu sind im Tankboden 14 um die Vertiefung 16, zum Beispiel kreisförmig angeordnet, eine Anzahl von bevorzugt rippenförmig ausgebildeten Ausstülpungen 30 ausgebildet. Diese insbesondere rippenförmig ausgebildeten Ausstülpungen 30 können zum Beispiel in einer Winkelteilung von 120° (vergleiche Darstellung gemäß Figur 2) um die Vertiefung 16 im Tankboden 14 ausgebildet sein. Die in Figur 1 dargestellte Ausstülpung 30 kann zum Beispiel in die Blasform, in der der im Wege des Blasform-Verfahrens hergestellte Tank 10 gefertigt wird, eingelassen sein. Aus Figur 1 geht hervor, dass die bevorzugt rippenförmig gestaltete Aussparung 30 eine Kontaktfläche 32 aufweist. Die Kontaktfläche 32 erstreckt sich über den Führungsbereich 28, d. h. den unteren Bereich der Mantelfläche 22 des in der Vertiefung 16 entsprechend dem Verfahrweg 46 in axiale Richtung beweglich aufgenommenen Schwapptopfes 20.

Eine besonders gute axiale und radiale Führung des Schwapptopfes 20 lässt sich durch eine Konizität 34 erreichen, die zwischen den Kontaktflächen 32 und den zu dieser korrespondierenden Aussparung in der Mantelfläche 22 im Führungsbereich 28 des Schwapptopfes 20 hergestellt wird. Insbesondere lässt sich die Konizität 34 zwischen den Kontaktflächen 32 und der Mantelfläche 22 des Schwapptopfes 20 durch einen Kegelwinkel 36 charakterisieren, der im Bereich zwischen 5° und 15° liegen kann.

Bevorzugt werden im Tankboden 14 um die Vertiefung 16 herum eine Anzahl von bevorzugt rippenförmig gestalteten Ausstülpungen 30 hergestellt, so dass der Schwapptopf 20 in einem Führungsbereich 28 an mindestens drei Stellen in der Vertiefung 16 des Tankbodens 14 axial und radial geführt ist.

Wie aus der Darstellung gemäß Figur 1 weiter hervorgeht, ist die Oberseite 24 des Schwapptopfes 20 durch ein zum Beispiel als Feder ausgebildetes elastisches Element 42 beaufschlagt. Das elastische Element 42 stützt sich außer an der Oberseite 24 des Schwapptopfes 20 an einer Innenseite 40 des den Tank 10 verschließenden Tankdeckels 38 ab. Durch die Beaufschlagung des Schwapptopfes 20 mit dem in Figur 1 dargestellten Federelement 42 erfolgt eine Verspannung des Schwapptopfes 20 gegen den Tankdeckel 38. Aufgrund dieser Fixierung im Hohlraum 44 des Tankes 10 ist der Schwapptopf 20 im Hohlraum 44 des Tanks 10 schüttelfest gelagert. Die Steifigkeit der Lagerung kann durch eine Variation der Höhe des Führungsbereiches 28, d. h. eine Variation des Bereiches erreicht werden, in dem die Kontaktflächen 32 der bevorzugt rippenförmig ausgebildeten Ausstülpungen 30 in entsprechend korrespondierend ausgeführte Aussparungen in der Mantelfläche 22 des Schwapptopfes 20 eingreifen. Je größer die axiale Länge dieses Führungsbereiches 28 gewählt wird, eine desto längere Führung des Schwapptopfes 20 ergibt sich in Bezug auf die Vertiefung 16 im Tankboden 14 und desto höher kann der Schwapptopf 20 bauen.

Figur 2 zeigt eine Ansicht des Tankbodens des in Figur 1 dargestellten Tanks ohne Wiedergabe des Schwapptopfes.

Aus Figur 2 geht hervor, dass in einer Winkelteilung 58 von zum Beispiel 120° im Tankboden 14 um die Vertiefung 16 herum drei bevorzugt rippenförmig gestaltete Ausstülpungen 30 angeordnet sind. Anstelle der in Figur 2 dargestellten drei im Tankboden 14 um die Vertiefung 16 herum angeordneten, bevorzugt rippenförmig ausgestalteten Ausstülpungen 30 können auch vier oder mehr Ausstülpungen 30 im Tankboden 14 vorgesehen sein. Aus den bevorzugt rippenförmig ausgebildeten Ausstülpungen ergibt sich die 120°-Teilung 58, wie in Figur 2 dargestellt. In der im Tankboden 14 ausgebildeten Vertiefung 16 sammelt sich aufgrund der partiellen Ausbildung der Ausstülpungen ein Rest des Reduktionsmittels im Sumpf 18, wie in Figur 1 dargestellt.

Der Darstellung gemäß Figur 3 ist der Boden des Schwapptopfes zu entnehmen.

Figur 3 zeigt, dass entlang des Umfangs 56 des Bodens 26 des Schwapptopfes 20 eine zur Anzahl der bevorzugt rippenförmig gestalteten Ausstülpung 30 gemäß der Darstellung in Figur 3 korrespondierende Anzahl von Aussparungen 48 angeordnet ist. In der Darstellung gemäß Figur 3 sind die Aussparungen 48 mit einer Rundung 50 ausgebildet, in welche die jeweiligen Vorsprünge der in Figur 2 dargestellten, bevorzugt rippenförmig ausgebildeten Ausstülpungen 30 eingreifen, die um die Vertiefung 16 herum am Tankboden des Tanks 10 ausgebildet sind. Aufgrund des Durchmesserunterschiedes zwischen der Rundung 50 und der jeweiligen Spitzen der bevorzugt rippenförmig dargestellten Ausstülpungen 30 ergeben sich Freiräume, über welche das im Hohlraum 44 des Tanks bevorratete Reduktionsmittel dem Sumpf 18 zuströmen kann. Durch die Durchmesserunterschiede zwischen den Rundungen 50 am Umfang 56 des Bodens 26 bzw. im Führungsbereich 28 der Mantelfläche 22 des Schwapptopfes 20 und der bevorzugt rippenförmig ausgebildeten Ausstülpungen lässt sich eine axiale und radiale Führung des Schwapptopfes 20 in der Vertiefung 16 im Tankboden 14 erreichen. Da der Sumpf 18 in Bezug auf die Geometrie des Tanks 10 gemäß der Darstellung in Figur 1 an dessen Unterseite im Tankboden 14 ausgebildet ist, bewirkt ein Gefrieren des Reduktionsmittels im Sumpf 18 eine Vertikalverschiebung des Schwapptopfes 22 entgegen die Wirkung des elastischen Elementes 42, welches sich an der Innenseite 40 des Tankdeckels 38 abstützt. Aus Figur 1 geht hervor, dass entsprechend der Überdeckung, d. h. der Länge des Führungsbereiches 28 zwischen den Kontaktflächen 32 der bevorzugt rippenförmig dargestellten Ausstülpungen im Tankboden 14, korrespondierende Aussparungen 48 (vergleiche Darstellung gemäß Figur 3) im Boden 26 und in der Mantelfläche 28 des Schwapptopfes 20 eine Vertikalverschiebung entsprechend des durch den Doppelpfeil 46 angedeuteten Verfahrweges des Schwapptopfes 20 relativ zum Führungsbereich 16 kompensieren lässt. Durch die Beaufschlagung der Oberseite 24 des Schwapptopfes 20 mit dem elastischen Element 42 lässt sich eine schüttelfeste Anordnung des Schwapptopfes 20 im Tank 10 erreichen, da dieser einerseits im Führungsbereich 28 axial und radial in der Vertiefung 16 im Tankboden 14 geführt und andererseits durch das elastische Element 42 an seiner Oberseite in axialer Richtung vorgespannt ist.

Zwischen dem Deckel 38 und dem Tank 12 befindet sich eine Elastomerdichtung 61 Diese dichtet an einem Bereich 62 im Bereich des Deckels 38. Die Elastomerdichtung 61 ist in axiale Richtung verlängert und wird auf den oberen Rand des Schwapptopfes 20 aufgezogen und dort im Rahmen einer Pressung befestigt. Die Elastomerdichtung 31 gibt dem Schwapptopf 22 im oberen Bereich eine größere radiale Stabilität. Zum anderen verhindert die Elastomerdichtung 61, dass sich der Schwapptopf 20, so zum Beispiel bei starker Kurvenneigung, entleert. Die Flüssigkeit prallt gegen die Elastomerdichtung 61 und läuft von da aus zurück in den Schwapptopf 20. Die Elastomerdichtung 61 hat eine axiale Elastizität, die eine Volumenausdehnung des Reduktionsmittels bei Phasenübergang von flüssig zu fest aufnehmen kann.

## Patentansprüche

1. Tank (10) insbesondere zur Aufnahme eines Reduktionsmittels zur Eindosierung in das Abgas einer Verbrennungskraftmaschine, wobei der Tank (10) durch eine Tankwand (12), einen Tankboden (14) sowie einen Tankdeckel (38) begrenzt ist und im Hohlraum (44) des Tanks (10) ein Schwapptopf (20) aufgenommen ist, wobei der Schwapptopf (20) in einem Führungsbereich (28) in einer Vertiefung (16) im Tankboden (14) axial und radial geführt ist, **dadurch gekennzeichnet, daß** im Tankboden (14) eine Anzahl von bevorzugt rippenförmig ausgebildeten Ausstülpungen (30) ausgeführt ist, die in Kreisform um die Vertiefung (16) im Tankboden (14) angeordnet sind.

2. Tank (10) gemäß Anspruch 1, **dadurch gekennzeichnet, dass** eine Oberseite 24 des Schwapptopfes (20) durch ein elastisches Element (42) mit einer axialen Vorspannkraft beaufschlagt ist.

3. Tank (10) gemäß Anspruch 1, **dadurch gekennzeichnet, dass** im Tankboden (14) des Tanks (10) eine einen Sumpf (18) bildende Vertiefung (16) ausgebildet ist.

4. Tank (10) gemäß einem der vorhergehenden Ansprüche, **dadurch gekennzeichnet, dass** die bevorzugt rippenförmig ausgebildeten Ausstülpungen (30) im Tankboden (14) eine konisch zulaufende Kontaktfläche (32) aufweisen.

5. Tank (10) gemäß einem der vorhergehenden Ansprüche, **dadurch gekennzeichnet, dass** die Konizität (34) der Kontaktflächen (32) der bevorzugt rippenförmig ausgebildeten Ausstülpungen (30) im Tankboden (14) zur Konizität von Aussparungen (48) in einer Mantelfläche (21) des Schwapptopfes (20) korrespondiert.

6. Tank (10) gemäß Anspruch 1, **dadurch gekennzeichnet, dass** eine Oberseite (24) des Schwapptopfes (20) durch ein sich an einer Tankdecke (38) abstützendes elastisches Element (42) beaufschlagt ist.

7. Tank (10) gemäß Anspruch 1, **dadurch gekennzeichnet, dass** eine entlang eines Führungsbereiches (28) an der Mantelfläche (22) des Schwapptopfes (20) in einer der Anzahl der bevorzugt rippenförmig ausgebildeten Ausstülpungen (30) entsprechende Anzahl von Aussparungen (48) ausgebildet ist

8. Tank (10) gemäß Anspruch 7, **dadurch gekennzeichnet, dass** die am Umfang (56) des Bodens (26) und an der Mantelfläche (22) im Führungsbereich (28) ausgebildeten Aussparungen (48) eine Rundung (50) aufweisen.

9. Tank (10) gemäß den vorhergehenden Ansprüchen, **dadurch gekennzeichnet, dass** ein Rundungsradius der bevorzugt rippenförmig ausgebildeten Aussparungen (30) im Tankboden (14) kleiner ist als ein Radius der Rundung (50) der Aussparungen (48) am Umfang (56) des Bodens (26) und an der Mantelfläche (22) des Schwapptopfes (20) in dessen Führungsbereich (28).

## Claims

1. Tank (10), in particular for holding a reducing agent for dosing into the exhaust gas of an internal combustion engine, the tank (10) being delimited by a tank wall (12), a tank base (14) and a tank cover (38), and a slosh pot (20) being held in the cavity (44) of the tank (10), the slosh pot (20) being guided axially and radially in a guide region (28) in a depression (16) in the tank base (14), **characterized in that** a number of preferably rib-shaped protuberances (30) is formed in the tank base (14), which protuberances are arranged in a circular fashion around the depression (16) in the tank base (14).

2. Tank (10) according to Claim 1, **characterized in that** a top side (24) of the slosh pot (20) is loaded with an axial preload force by an elastic element (42).

3. Tank (10) according to Claim 1, **characterized in that** a depression (16) which forms a sump (18) is formed in the tank base (14) of the tank (10).

4. Tank (10) according to one of the preceding claims, **characterized in that** the preferably rib-shaped protuberances (30) in the tank base (14) have a conically tapering contact surface (32).

5. Tank (10) according to one of the preceding claims, **characterized in that** the conicity (34) of the contact surfaces (32) of the preferably rib-shaped protuberances (30) in the tank base (14) corresponds to the conicity of cutouts (48) in a lateral surface (21) of the slosh pot (20).

6. Tank (10) according to Claim 1, **characterized in that** a top side (24) of the slosh pot (20) is loaded by an elastic element (42) which is supported on a tank cover (38).

7. Tank (10) according to Claim 1, **characterized in that** a number of cutouts (48) corresponding to the number of preferably rib-shaped protuberances (30) is formed along a guide region (28) on the lateral surface (22) of the slosh pot (20).

8. Tank (10) according to Claim 7, **characterized in that** the cutouts (48) formed on the circumference (56) of the base (26) and on the lateral surface (22) in the guide region (28) have a rounding (50).

9. Tank (10) according to the preceding claims, **characterized in that** a rounding radius of the preferably rib-shaped cutouts (30) in the tank base (14) is smaller than a radius of the rounding (50) of the cutouts (48) on the circumference (56) of the base (26) and on the lateral surface (22) of the slosh pot (20) in its guide region (28).

## Revendications

1. Réservoir (10), en particulier pour recevoir un agent réducteur destiné à être introduit de manière dosée dans le gaz d'échappement d'un moteur à combustion interne, le réservoir (10) étant limité par une paroi de réservoir (12), un fond de réservoir (14) ainsi qu'un couvercle de réservoir (38) et un pot de fluctuation (20) étant reçu dans la cavité (44) du réservoir (10), le pot de fluctuation (20) étant guidé axialement et radialement dans une région de guidage (28) dans un renfoncement (16) dans le fond du réservoir (14), **caractérisé en ce qu'**une pluralité de protubérances (30) réalisées de préférence en forme de nervures est réalisée dans le fond du réservoir (14), lesquelles protubérances sont disposées sous forme circulaire autour du renfoncement (16) dans le fond du réservoir (14).

2. Réservoir (10) selon la revendication 1, **caractérisé en ce qu'**un côté supérieur (24) du pot de fluctuation (20) est sollicité avec une force de précontrainte axiale par un élément élastique (42).

3. Réservoir (10) selon la revendication 1, **caractérisé en ce qu'**un renfoncement (16) formant un puisard (18) est réalisé dans le fond de réservoir (14) du réservoir (10).

4. Réservoir (10) selon l'une quelconque des revendications précédentes, **caractérisé en ce que** les protubérances (30) réalisées de préférence en forme de nervures dans le fond du réservoir (14) présentent une surface de contact (32) s'effilant sous forme conique.

5. Réservoir (10) selon l'une quelconque des revendications précédentes, **caractérisé en ce que** la conicité (34) des surfaces de contact (32) des protubérances (30) réalisées de préférence en forme de nervures dans le fond du réservoir (14) correspond à la conicité des évidements (48) dans une surface d'enveloppe (21) du pot de fluctuation (20).

6. Réservoir (10) selon la revendication 1, **caractérisé en ce qu'**un côté supérieur (24) du pot de fluctuation (20) est sollicité par un élément élastique (42) s'appuyant contre un couvercle de réservoir (38).

7. Réservoir (10) selon la revendication 1, **caractérisé en ce qu'**un nombre d'évidements (48) correspondant au nombre des protubérances (30) réalisées de préférence en forme de nervures est réalisé le long d'une région de guidage (28) sur la surface d'enveloppe (22) du pot de fluctuation (20).

8. Réservoir (10) selon la revendication 7, **caractérisé en ce que** les évidements (48) réalisés sur la périphérie (56) du fond (26) et sur la surface d'enveloppe (22) dans la région de guidage (28) présentent un arrondi (50).

9. Réservoir (10) selon l'une quelconque des revendications précédentes, **caractérisé en ce qu'**un rayon d'arrondi des évidements (30) réalisés de préférence en forme de nervures dans le fond du réservoir (14) est inférieur à un rayon de l'arrondi (50) des évidements (48) sur la périphérie (56) du fond (26) et sur la surface d'enveloppe (22) du pot de fluctuation (20) dans sa région de guidage (28).
